# EUROPÄISCHE PATENTSCHRIFT

(11) **EP 2 322 683 B1**
(45) Veröffentlichungstag und Bekanntmachung des Hinweises auf die Patenterteilung: **03.06.2020**
(21) Anmeldenummer: 09014306.6
(22) Anmeldetag: 16.11.2009
(51) Int. Cl.: C23C 4/02, C23C 4/18, C23C 28/00, F01D 5/18, F01D 5/28

(54) **BESCHICHTUNGSVERFAHREN EINES BAUTEILS MIT TEILWEISE VERSCHLOSSENEN LÖCHERN UND VERFAHREN ZUM ÖFFNEN DER LÖCHER**
COATING METHOD FOR A COMPONENT WITH PARTIALLY CLOSED HOLES AND METHOD FOR OPENING THE HOLES
PROCÉDÉ DE REVÊTEMENT D'UN COMPOSANT DOTÉ D'UN ORIFICE PARTIELLEMENT FERMÉ ET PROCÉDÉ D'OUVERTURE DE L'ORIFICE

(43) Veröffentlichungstag der Anmeldung: 18.05.2011
(73) Patentinhaber: Siemens Aktiengesellschaft, 80333 München (DE)
(72) Erfinder: Ladru, Francis-Jurjen, 13587 Berlin (DE); Massa, Andrea, 12157 Berlin (DE); Melzer-Jokisch, Torsten, 15366 Neuenhagen bei Berlin (DE); Motzkus, Ralf, 13187 Berlin (DE); Oppert, Andreas, 14612 Falkensee (DE); Thomaidis, Dimitrios, 10367 Berlin (DE)

(56) Entgegenhaltungen:
- EP-A1- 1 510 283
- EP-A1- 1 669 545
- EP-A1- 1 767 743

## Beschreibung

Die Erfindung betrifft ein Beschichtungsverfahren eines Bauteils, das Löcher aufweist, wobei beim Beschichten nicht alle Löcher verschlossen werden und ein Verfahren zum Öffnen dieser Löcher.

Verfahren zum Öffnen von Kühlluftlöcher sind beispielsweise in EP1669545A1, EP1767743A1 und EP1510283 beschrieben.

Bauteile, wie z.B. Turbinenschaufeln einer Gasturbine weisen Kühlluftbohrungen auf. Solche Kühlluftbohrungen werden bei der Neuherstellung direkt in das Substrat vor dem weiteren Aufbringen von Schichten eingebracht oder sind bereits bei einem wieder aufzuarbeitenden Bauteil vorhanden, bei dem die Beschichtungen ersetzt werden. In beiden Fällen besteht das Problem des "Coat downs", d.h. das Beschichtungsmaterial in die Kühlluftbohrungen eindringt und diese in unerwünschter Weise verschließt.

Es gibt Verfahren, die Kühlluftbohrungen zu verschließen, wobei das vollständige Abdecken, insbesondere auch während des Beschichtungsprozesses nicht immer gewährleistet ist.

Bei der nachträglichen Entfernung des "Coat downs" aus den Kühlluftbohrungen besteht das Problem der richtigen Ausrichtung der Kühlluftreihe in der Apparatur, mittels der die Beschichtung aus den Kühlluftbohrungen entfernt wird, da die Ausrichtung von einer gewünschten Geometrie abweicht.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Bauteil mit einer Reihe von Kühlluftbohrungen,
- Figur 2,3,4,5, 6: Bauteile für das erfindungsgemäße Beschichtungsverfahren,
- Figur 7: eine Gasturbine,
- Figur 8: eine Turbinenschaufel,
- Figur 9: eine Brennkammer und
- Figur 10: eine Liste von Superlegierungen.

Die Zeichnungen und die folgende Beschreibung stellen die Erfindung dar.

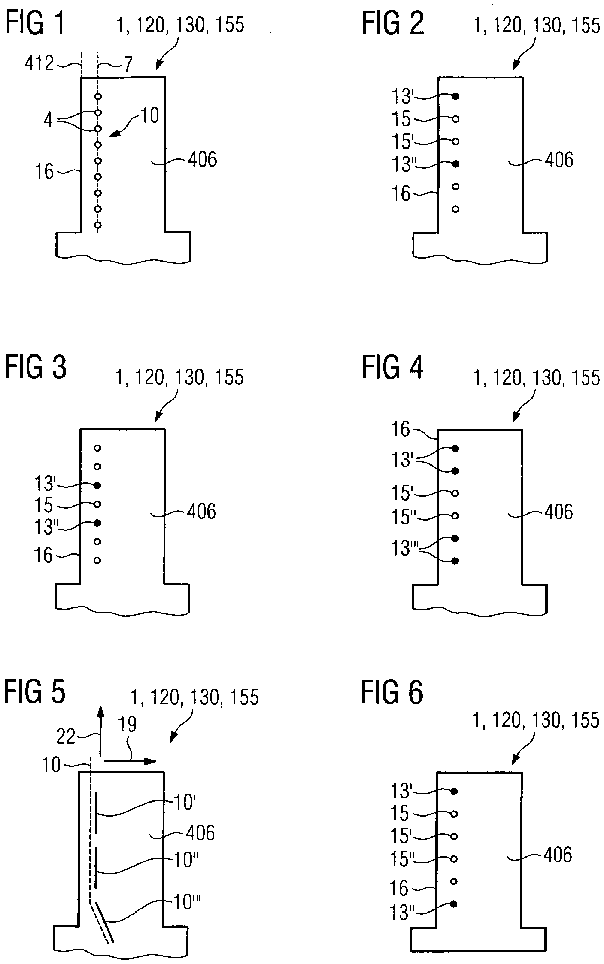

In Figur 1 ist ein Bauteil 1, 120, 130, 155 dargestellt, das als Beispiel für Löcher Kühlluftbohrungen 4 (Fig. 1), 13', 13", ..., 15', 15" (Fig. 2 - 4) in einer Kühlluftreihe oder Lochreihe 10 aufweist.
Das Bauteil 120, 130, 155 kann mehrere solcher Kühlluftreihen 10', 10", 10"' aufweisen (Fig. 5).
Eine Kühlluftreihe verläuft entlang einer Geraden (Fig. 1) bzw. einer leicht geknickten Geraden (Fig. 5) bzw. weist einen nicht gekrümmten (nicht dargestellt) Verlauf auf.

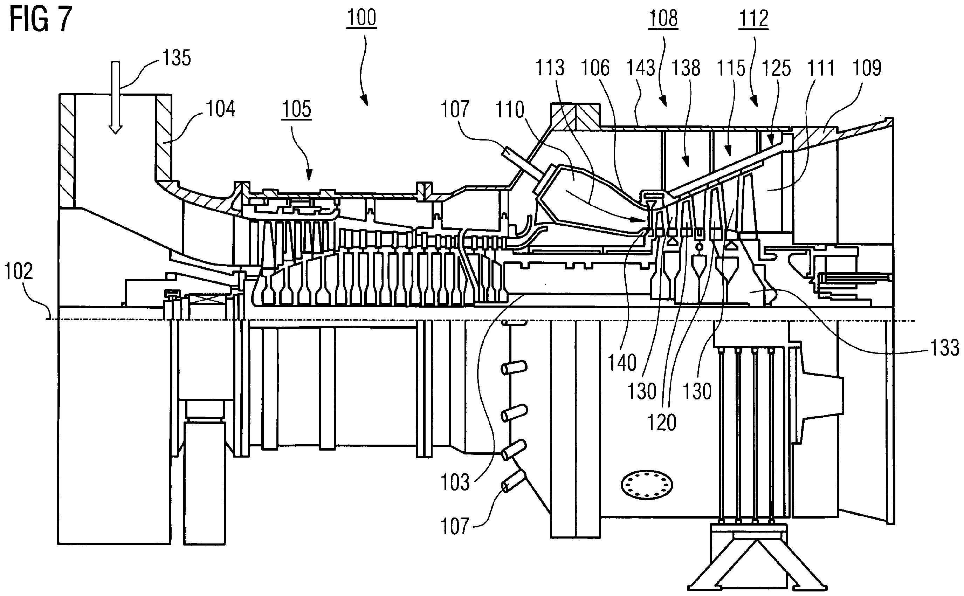

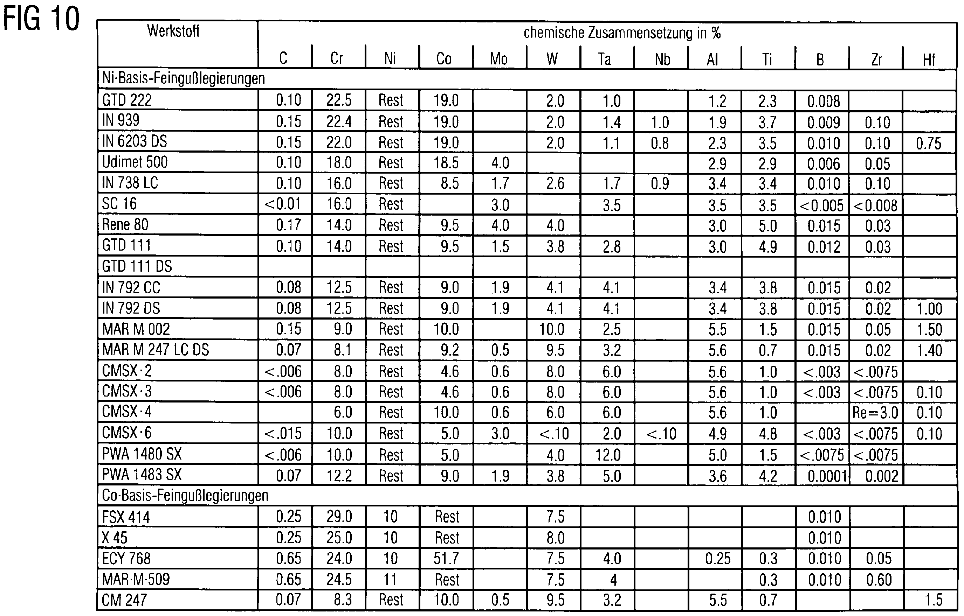

Das Bauteil 1 ist hier beispielsweise eine Turbinenschaufel 120, 130 einer Gasturbine 100 (Fig. 7), dessen Basismaterial (Substrat) eine Superlegierung, insbesondere eine Nickelbasissuperlegierung (Figur 10) aufweist.
Das Schaufelblatt 406 des Bauteils 120, 130 weist zumindest eine Reihe 10, 10', 10", ... von Kühlluftlöchern 4, 13', 13", 15', 15" auf.
In Figur 1 ist in nicht beschränkender Weise nur eine Kühlluftreihe 10 dargestellt.

Die Kühlluftlöcher 4 der Kühlluftreihe 10 liegen auf einer Linie 7, insbesondere einer geraden Linie 7, die einen bestimmten Abstand zur Abström- oder Anströmkante 412, 409 aufweist oder die Löcher 4 weisen untereinander eine bestimmte Ausrichtung auf. Bei der Erzeugung der Löcher 4 zur Herstellung der Kühlluftreihe 10 in das Bauteil 1, 120, 130, 155 kann es zu einer ungewollten Verschiebung der gestrichelten Linien 412, 7 zueinander kommen. Dies wird toleriert und stellt keinerlei Einschränkung für den ersten Einsatz des Bauteils 120, 130 dar.

Muss jedoch aus den Kühlluftlöchern 4 Material entfernt werden wie beim Neubeschichten oder beim Refurbishment, so geht das Bearbeitungssystem, insbesondere die eines Lasers von der idealen Ausrichtung von Linie 412 und Linie 7 aus.

Da dies manchmal nicht der Fall ist, muss das Bearbeitungssystem neu programmiert werden, um die reale Situation zu berücksichtigen.
Dies geschieht dadurch, dass zumindest zwei Kühlluftlöcher 13', 13", ... einer Kühlluftreihe 10 von Kühlluftlöcher 4 vor der Beschichtung maskiert und verschlossen werden. Dies kann auf verschiedene Art und Weise, wie im Stand der Technik beschrieben, erfolgen.
Dabei werden vorzugsweise bis zu 50%, insbesondere bis 40% der Kühlluftlöcher verschlossen.

Dann findet die Beschichtung des Substrats 4 statt. Dies kann eine metallische Anbindungsschicht sein (insbesondere MCrAlY) oder eine metallische Anbindungsschicht und eine keramische Schicht obendrauf sein oder nur eine ein-, zwei-, oder mehrlagige keramische Schicht.

Unabhängig davon, ob eine Schicht oder zwei Schichten aufgebracht werden, werden die nicht verschlossenen Kühlluftbohrungen 15', 15" beschichtet und zumindest teilweise oder vollständig verschlossen. Dieses Beschichtungsmaterial in den Löchern 15', 15" muss nach dem Beschichtungsprozess entfernt werden. Die vorher verschlossen Kühlluftlöcher 13', 13" weisen jedoch innerhalb der Löcher kein oder kaum Beschichtungsmaterial auf und müssen nicht nachbearbeitet werden.

Vor der Nachbearbeitung der verschlossenen Kühlluftbohrungen 15', 151" ... wird das Maskierungsmaterial aus den Kühlluftbohrungen 13', 13", ... entfernt, insbesondere manuell geöffnet. Dann wird eine gedachte gerade Line 7 durch die nicht beschichteten Kühllöcher gelegt. Das Bearbeitungssystem (nicht näher dargestellt) erkennt die nicht verschlossenen Löcher 13', 13" und wird bezüglich einer Linie 7 zwischen den Kühlluftbohrungen 13', 13"' ausgerichtet, so dass das Bearbeitungssystem bzw. insbesondere der Laser weiß, wie die Linie 7 der Kühlluftreihe 10 unabhängig zu der Ausrichtung der Linie 412 gegeben ist.

Daher müssen immer zumindest zwei Kühlluftbohrungen 13', 13" verschlossen bzw. wieder geöffnet werden, damit eine Linie 7 oder eine Linie mit bekannten Verlauf (Länge, Krümmungswinkel) gebildet werden kann. Welche Kühlluftlöcher verschlossen werden spielt keine Rolle. Dies kann eine obere und mittlere oder das oberste und unterste Kühlluftloch (Fig. 4) sein, dies können zwei mittlere Kühlluftlöcher sein (Figur 3) .
Vorzugsweise sind dies das oberste und das unterste Loch (Fig. 6).

Vorzugsweise ist zwischen den zumindest zwei verschlossenen Kühlluftlöcher 13', 13" zumindest ein Kühlluftloch 15', 15", insbesondere sind zumindest mehrere nicht verschlossene Kühlluftlöcher 15', 15" vorhanden.

Ebenso können zwei nebeneinander liegende Kühlluftbohrungen 13', 13" verschlossen werden, wobei dann in der Reihe 10 eine Anzahl von nicht verschlossenen Kühlluftbohrungen 15', 15" folgt und dann wieder ein oder zwei maskierte Kühlluftbohrungen 13', 131", die vor dem Beschichten verschlossen sind.

Die Figur 5 zeigt ein Ausführungsbeispiel der Erfindung.

Hier besteht eine Kühlluftreihe 10 aus mehreren Kühlluftabschnitten 10', 10", 10"', die untereinander eine verschiedene Ausrichtung zur Anströmkante 409 haben oder auf einer geraden Linie liegen und bezüglich ihrer Diffusorgeometrie unterschiedliche Eigenschaften aufweisen (Jeder Abschnitt ist quasi eine Kühlluftreihe). So können z. B. auch auf einer vorzugsweise geraden Linie 10 Abschnitte 10', 10", 10"' vorhanden sein, wobei das Kühlluftloch in dem jeweiligen Abschnitt 10', 10''', 10''' eine andere Größe oder eine andere Orientierung/Diffusorgeometrie zur Überströmrichtung 19 oder Längsachse 22 des Schaufelblatts 406 aufweist.

Für die Vorbereitung zum Beschichten gilt vergleichbares für die Vorgehensweise gemäß Figur 2, 3, 4 oder 6, d. h., hier wird für jeden Abschnitt 10', 10", 10"' das jeweilige Muster und Vorgabeweise der Figur 2, 3, 4 oder 6 angewandt, d. h., es werden zumindest zwei Kühlluftlöcher 13', 13" eines Abschnitts 10', 10", 10"' verschlossen und nach der Beschichtung geöffnet wird.

Innerhalb eines Kühlluftabschnittes 10', 10", 10"' sind die Kühlluftlöcher 4 vorzugsweise identisch. Die Kühlluftabschnitte 10', 10", 10"' stellen quasi eine Kühlluftreihe dar.

Die Figur 7 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

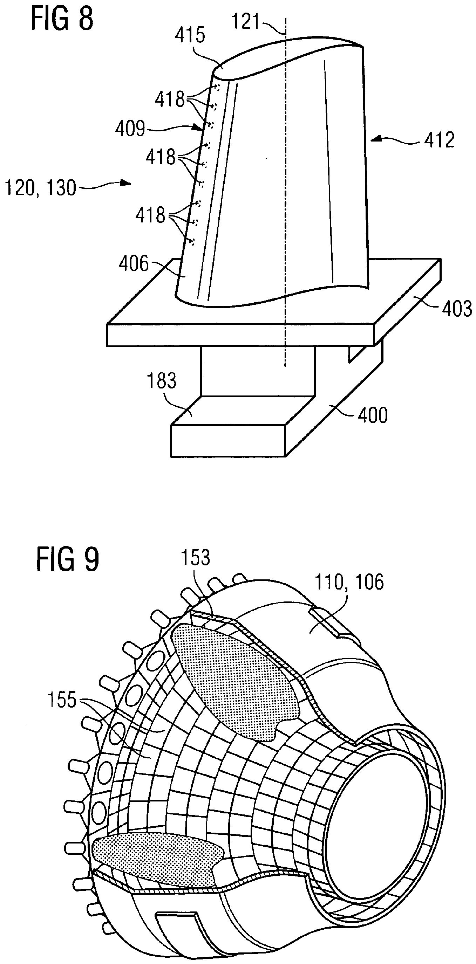

Die Figur 8 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweit genannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-O,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 9 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zum Öffnen von Kühlluftlöcher (15', 15", 15"') von Kühlluftreihen (10', 10", 10"'...) eines Bauteils (1, 120, 130, 155),
das zumindest eine Reihe (10, 10', 10", 10"', ...) von Löchern (4, 13', 13", 15', 15", ...) aufweist,
bei dem vor dem Beschichten zumindest zwei Löcher (13', 13", 13"', ...), aber nicht alle Löcher (15', 15", ...) der zumindest einen Lochreihe (10, 10', 10", 10"', ...) mit einem Maskierungsmaterial versehen werden,
so dass die zumindest zwei Löcher (13', 13", 13"', ...) beim Beschichten innerhalb des Kühlluftlochs (13', 13", ...) nicht oder kaum beschichtet werden und
Beschichten des Bauteils (1, 120, 130, 155) mit offenen Löchern (15', 15", ...) und verschlossenen Löchern (13', 13", 13"', ...),
bei dem nach dem Beschichten das Maskierungsmaterial aus den Kühlluftbohrungen (13', 13", 13"') entfernt wird, um es zu beschichten,
und Wiederöffnen der Kühlluftlöcher (15', 15", ...) durch eine Bearbeitungsmaschine,
bei dem zur Ermittlung der tatsächlichen Ausrichtung (7) der in einer Lochreihe (10, 10', 10", 10"', ...) angeordneten Kühlluftlöcher (13', 13", ..., 15', 15", ...) die beim Beschichten nicht beschichteten Kühlluftbohrungen (13', 13", 13"') einer Lochreihe (10, 10', 10", 10''', ...) herangezogen werden,
um die Lage der beschichteten Kühlluftlöcher (15', 15") zu ermitteln.

2. Verfahren nach Anspruch 1,
bei dem die Löcher (13', 13", 13"') Kühlluftlöcher sind.

3. Verfahren nach Anspruch 1 oder 2,
bei dem in einer Lochreihe (10', 10", 10"', ...) eines maskierten Bauteils (1, 120, 130, 155) zwischen den maskierten Kühlluftbohrungen (13', 13") zumindest ein, insbesondere mehrere nicht verschlossene Kühlluftbohrungen (15', 15", ...) in einer Lochreihe (10, 10', 10", 10"', ...) vorhanden sind.

4. Verfahren nach Anspruch 1, 2 oder 3,
bei dem zumindest drei,
insbesondere vier Kühlluftlöcher (13', 13") vor dem Beschichten maskiert werden,
wobei vorzugsweise zwei maskierte Kühlluftbohrungen (13', 13"' 13"') direkt nebeneinander liegen und
zumindest ein,
insbesondere mehrere nicht verschlossene Kühlluftbohrungen (15', 15'', ...) in der Lochreihe (10, 10', 10", 10''', ...) zwischen den anderen maskierten Kühlluftlöchern (13', 13", 13"') liegt.

5. Verfahren nach Anspruch 1, 2, 3 oder 4,
bei dem zumindest bis 50%,
insbesondere bis zu 40% der Kühlluftlöcher verschlossen sind.

6. Verfahren nach Anspruch 1, 2, 3, 4 oder 5,
bei dem das oberste und das unterste Loch einer Lochreihe (10, 10', 10", 10"', ...) verschlossen ist,
insbesondere nur das oberste und das unterste Loch einer Lochreihe (10, 10', 10", 10"', ...) verschlossen ist.

7. Verfahren nach Anspruch 1, 2, 3, 4, 5 oder 6,
bei dem die Kühlluftlöcher (13', 13", 13"') einer Lochreihe (10, 10', 10"', 10"', ...) verschieden ausgebildet sind oder
die Lochreihe (10) in Abschnitte (10', 10", 10"') unterteilt ist, bei denen die Ausrichtung der Kühlluftlöcher (13,', 13", 13"') eines Abschnitts (10', 10", ...) verschieden ist, und
bei dem für jeden Abschnitt (10', 10", 10"') zumindest zwei Kühlluftbohrungen (13, 13', 13", 13"') verschlossen werden.

## Claims

1. Process for opening cooling-air holes (15', 15", 15"') of cooling-air rows (10', 10", 10", ...) in a component (1, 120, 130, 155), which has at least one row (10, 10', 10", 10"'', ...) of holes (4, 13', 13", 15', 15", ...),
in which process at least two holes (13', 13", 13"', ...), but not all the holes (15', 15", ...), in the at least one row (10, 10', 10", 10"', ...) of holes are provided with a masking material before the coating,
such that the at least two holes (13', 13", 13"', ...) are not coated or are scarcely coated during the coating within the cooling-air hole (13', 13", ...), and
the component (1, 120, 130, 155) having open holes (15', 15", ...) and closed holes (13', 13", 13"', ...) is coated,
in which the masking material is removed from the cooling-air bores (13', 13", 13"') after the coating,
in order to coat said component,
and the cooling-air holes (15', 15", ...) are reopened by a machining machine
in which the actual alignment (7) of the cooling-air holes (13', 13", ..., 15', 15", ...) arranged in a row (10, 10', 10", 10"', ...) of holes is determined by using the cooling-air bores (13', 13", 13"'), which are not coated during the coating, in a row (10, 10', 10", 10"', ...) of holes,
in order to determine the position of the coated cooling-air holes (15', 15").

2. Process according to Claim 1,
in which the holes (13', 13", 13"') are cooling-air holes.

3. Process according to Claim 1 or 2,
in which at least one unclosed cooling-air bore, in particular a plurality of unclosed cooling-air bores (15', 15", ...), is or are present in a row (10, 10', 10", 10"', ...) of holes in a row (10', 10", 10"', ...) of holes in a masked component (1, 120, 130, 155) between the masked cooling-air bores (13', 13").

4. Process according to Claim 1, 2 or 3,
in which at least three,
in particular four, cooling-air holes (13', 13") are masked before the coating,
wherein it is preferable for two masked cooling-air bores (13', 13", 13"') to lie directly next to one another, and
at least one unclosed cooling-air bore,
in particular a plurality of unclosed cooling-air bores (15', 15", ...), in the row (10, 10', 10'', 10"', ...) of holes lies or lie between the other masked cooling-air holes (13', 13", 13"').

5. Process according to Claim 1, 2, 3 or 4,
in which at least up to 50%,
in particular up to 40%, of the cooling-air holes are closed.

6. Process according to Claim 1, 2, 3, 4 or 5,
in which the topmost hole and the bottommost hole in a row (10, 10', 10", 10"', ...) of holes are closed,
in particular only the topmost hole and the bottommost hole in a row (10, 10', 10", 10"', ...) of holes are closed.

7. Process according to Claim 1, 2, 3, 4, 5 or 6,
in which the cooling-air holes (13', 13", 13"') in a row (10, 10', 10", 10"', ...) of holes are formed differently, or
the row (10) of holes is divided into portions (10', 10", 10"'), in which the alignment of the cooling-air holes (13', 13'', 13"') of a portion (10', 10", ...) differs, and
in which at least two cooling-air bores (13, 13', 13", 13"') are closed for each portion (10', 10", 10"').

## Revendications

1. Procédé d'ouverture de trous (15', 15", 15"') d'air de refroidissement de rangées (10', 10", 10"'...) d'air de refroidissement d'une pièce (1, 120, 130, 155),
qui a au moins une rangée (10, 10', 10", 10"', ...) de trous (4, 13', 13", 15', 15", ...), dans lequel on a muni, avant le revêtement, au moins deux trous (13', 13", 13"', ...), mais non tous les trous (15', 15", ...), de la au moins une rangée (10, 10', 10", 10"', ...) de trous d'un matériau de masquage,
de manière à ne pas revêtir ou à ne guère revêtir les au moins deux trous (13', 13", 13"', ...) lors du revêtement à l'intérieur du trou (13', 13", ...) d'air de refroidissement et
on revêt la pièce (1, 120, 130, 155) ayant des trous (15', 15", ...) ouverts et des trous (13', 13", 13"', ...) fermés,
dans lequel, après le revêtement, on retire la matière de masquage des trous (13', 13", 13"') d'air de refroidissement pour les revêtir,
et on ouvre à nouveau les trous (15', 15", ...) d'air de refroidissement par une machine d'usinage,
dans lequel, pour déterminer la direction (7) réelle des trous (13', 13", ..., 15', 15", ...) d'air de refroidissement, disposés dans une rangée (10, 10', 10", 10"', ...) de trous, on tire parti des trous (13', 13", 13'") d'air de refroidissement non revêtus lors du revêtement, d'une rangée (10, 10', 10", 10"', ...) de trous,
afin de déterminer la position des trous (15', 15") d'air de refroidissement revêtus.

2. Procédé suivant la revendication 1,
dans lequel les trous (13', 13", 13"') sont des trous d'air de refroidissement.

3. Procédé suivant la revendication 1 ou 2,
dans lequel, dans une rangée (10', 10", 10"', ...) de trous d'une pièce (1, 120, 130, 155) masquée, il y a, entre les trous(13', 13") d'air de refroidissement masqués, au moins un, notamment plusieurs trous (15', 15", ...) d'air de refroidissement fermés d'une rangée (10, 10', 10", 10"', ...) de trous.

4. Procédé suivant la revendication 1, 2 ou 3,
dans lequel on masque au moins trois, notamment quatre trous (13', 13") d'air de refroidissement avant le revêtement, dans lequel, de préférence deux trous (13', 13", 13"') d'air de refroidissement masqués sont directement l'un à côté de l'autre et
au moins un,
notamment plusieurs trous (15', 15", ...) d'air de refroidissement non fermés de la rangée (10, 10', 10", 10"', ...) de trous se trouvent entre les autres trous (13', 13", 13"') d'air de refroidissement masqués.

5. Procédé suivant la revendication 1, 2, 3 ou 4,
dans lequel au moins jusqu'à 50%,
notamment jusqu'à 40% des trous d'air de refroidissement sont fermés.

6. Procédé suivant la revendication 1, 2, 3, 4 ou 5,
dans lequel le trou le plus haut et le trou le plus bas d'une rangée (10, 10', 10", 10"', ...) de trous est fermé, notamment seulement le trou le plus haut et le trou le plus bas d'une rangée (10, 10', 10", 10"', ...) de trous est fermé.

7. Procédé suivant la revendication 1, 2, 3, 4, 5 ou 6,
dans lequel les trous (13', 13", 13"') d'air de refroidissement d'une rangée (10, 10', 10", 10"', ...) de trous sont constitués de manière différente ou
la rangée (10) de trous est subdivisée en parties (10', 10", 10"'), dans lesquelles la direction des trous (13', 13", 13"') d'air de refroidissement d'une partie (10', 10", ...) est différente, et
dans lequel, pour chaque partie (10', 10", 10"'), on forme au moins deux trous (13, 13', 13", 13"') d'air de refroidissement.
